# EUROPÄISCHE PATENTSCHRIFT

(11) **EP 3 766 847 B1**
(45) Veröffentlichungstag und Bekanntmachung des Hinweises auf die Patenterteilung: **13.11.2024**
(21) Anmeldenummer: 19186768.8
(22) Anmeldetag: 17.07.2019
(51) Int. Cl.: C03B 37/012, C03B 37/027

(54) **VERFAHREN ZUR HERSTELLUNG EINER HOHLKERNFASER UND ZUR HERSTELLUNG EINER VORFORM FÜR EINE HOHLKERNFASER**
METHOD FOR PRODUCING A HOLLOW CORE FIBRE AND FOR PRODUCING A PREFORM FOR A HOLLOW CORE FIBRE
PROCÉDÉ DE FABRICATION D'UNE FIBRE À COEUR CREUX ET DE FABRICATION D'UNE PRÉFORME DE FIBRE À COEUR CREUX

(43) Veröffentlichungstag der Anmeldung: 20.01.2021
(73) Patentinhaber: Heraeus Quarzglas GmbH & Co. KG, 63450 Hanau (DE)
(72) Erfinder: ROSENBERGER, Manuel, 63450 Hanau (DE); EHRENTRAUT, Enrico, 63450 Hanau (DE); REIS, Benjamin, 63450 Hanau (DE); TANSEL, Yusuf, 63450 Hanau (DE); KOSTKA, David, 63450 Hanau (DE); SATTMANN, Ralph, 63450 Hanau (DE); VYDRA, Jan, 63450 Hanau (DE)
(74) Vertreter: Staudt, Armin Walter

(56) Entgegenhaltungen:
- EP-A1- 3 136 143
- US-A1- 2005 226 578
- A F KOSOLAPOV ET AL: "Hollow-core revolver fibre with a double-capillary reflective cladding", QUANTUM ELECTRONICS., vol. 46, no. 3, 29 March 2016 (2016-03-29), GB, pages 267 - 270, XP055502520, ISSN: 1063-7818, DOI: 10.1070/QEL15972

## Beschreibung

### Technischer Hintergrund

Die Erfindung betrifft ein Verfahren zur Herstellung einer Antiresonanten Hohlkernfaser, die einen sich entlang einer Faser-Längsachse erstreckenden Hohlkern und einen den Hohlkern umgebenden Mantelbereich aufweist, der mehrere Antiresonanzelemente umfasst, mit den Verfahrensschritten:
(a) Bereitstellen eines Hüllrohres, das eine Hüllrohr-Innenbohrung und eine Hüllrohr-Längsachse aufweist, entlang der sich eine von einer Innenseite und einer Außenseite begrenzte Hüllrohr-Wandung erstreckt,
(b) Bereitstellen einer Anzahl von Antiresonanzelement-Vorformlingen,
(c) Anordnen der Antiresonanzelement-Vorformlinge an Soll-Positionen der Innenseite der Hüllrohr-Wandung unter Bildung einer primären Vorform für die Hohlkernfaser, die einen hohlen Kernbereich und einen Mantelbereich aufweist, und
(d) Elongieren der primären Vorform zu der Hohlkernfaser oder Weiterverarbeitung der primären Vorform zu einer sekundären Vorform, aus der die Hohlkernfaser gezogen wird, wobei die Weiterverarbeitung eine einmalige oder wiederholte Durchführung von einem oder mehreren der folgenden Heißformprozesse umfasst:
   (i) Elongieren,
   (ii) Kollabieren,
   (iii) Kollabieren und gleichzeitiges Elongieren,
   (iv) Aufkollabieren von zusätzlichem Mantelmaterial,
   (v) Aufkollabieren von zusätzlichem Mantelmaterial und anschließendes Elongieren,
   (vi) Aufkollabieren von zusätzlichem Mantelmaterial und gleichzeitiges Elongieren.

Außerdem betrifft die Erfindung ein Herstellung einer Vorform für eine Antiresonante Hohlkernfaser, die einen sich entlang einer Faser-Längsachse erstreckenden Hohlkern und den Hohlkern umgebenden Mantelbereich aufweist, der mehrere Antiresonanzelemente umfasst, mit den Verfahrensschritten:
(a) Bereitstellen eines Hüllrohres, das eine Hüllrohr-Innenbohrung und eine Hüllrohr-Längsachse aufweist, entlang der sich eine von einer Innenseite und einer Außenseite begrenzte Hüllrohr-Wandung erstreckt,
(b) Bereitstellen einer Anzahl von Antiresonanzelement-Vorformlingen,
(c) Anordnen der Antiresonanzelement-Vorformlinge an Soll-Positionen der Innenseite der Hüllrohr-Wandung unter Bildung einer primären Vorform für die Hohlkernfaser, die einen hohlen Kernbereich und einen Mantelbereich aufweist, und
(d) optionale Weiterverarbeitung der primären Vorform zu einer sekundären Vorform für die Hohlkernfaser, wobei die Weiterverarbeitung eine einmalige oder wiederholte Durchführung von einem oder mehreren der folgenden Heißformprozesse umfasst:
   (i) Elongieren,
   (ii) Kollabieren,
   (iii) Kollabieren und gleichzeitiges Elongieren,
   (iv) Aufkollabieren von zusätzlichem Mantelmaterial,
   (v) Aufkollabieren von zusätzlichem Mantelmaterial und anschließendes Elongieren,
   (vi) Aufkollabieren von zusätzlichem Mantelmaterial und gleichzeitiges Elongieren

Herkömmliche Monomode-Lichtleitfasern aus Vollmaterial haben einen Kernbereich aus Glas, der von einem Mantelbereich aus Glas mit niedrigerem Brechungsindex umgeben ist. Die Lichtleitung beruht dabei auf Totalreflexion zwischen Kern- und Mantelbereich. Die Wechselwirkungen des geführten Lichtes mit dem Vollmaterial sind jedoch mit einer erhöhten Latenz bei der Datenübertragung und relativ niedrigen Schädigungsschwellen gegenüber energiereicher Strahlung verbunden.

Diese Nachteile vermeiden oder verringern "Hohlkernfasern", bei denen der Kern einen evakuierten, mit Gas oder Flüssigkeit gefüllten Hohlraum umfasst. In Hohlkernfasern ist die Wechselwirkung des Lichtes mit dem Glas geringer als in Vollkernfasern. Der Brechungsindex des Kerns ist kleiner als der des Mantels, so dass eine Lichtleitung durch Totalreflexion nicht möglich ist und das Licht normalerweise aus dem Kern in den Mantel entweichen würde. In Abhängigkeit vom physikalischen Mechanismus der Lichtleitung werden Hohlkernfasern unterteilt in "photonische Bandlückenfasern" und "Antiresonanz-Reflexionsfaser".

Bei "photonischen Bandlückenfasern" ist der hohle Kernbereich von einem Mantel umgeben, in dem kleine Hohlkanäle periodisch angeordnet sind. Die periodische Struktur der Hohlkanäle im Mantel bewirkt den in Anlehnung an die Halbleitertechnologie als "photonische Bandlücke" bezeichneten Effekt, wonach an den Mantelstrukturen gestreutes Licht bestimmter Wellenlängenbereiche aufgrund von Braggreflexion im zentralen Hohlraum konstruktiv interferiert und sich nicht transversal im Mantel ausbreiten kann.

Bei der als "Antiresonante Hohlkernfaser" ("antiresonant hollow-core fibers"; AR-HCF) bezeichneten Ausführungsform der Hohlkernfaser ist der hohle Kernbereich von einem inneren Mantelbereich umgeben, in dem sogenannte "antiresonante Elemente" (oder "Antiresonanzelemente"; kurz: "AREs") angeordnet sind. Die um den Hohlkern gleichmäßig verteilten Wandungen der Antiresonanzelemente können als in Antiresonanz betriebene Fabry-Perot-Kavitäten wirken, die das auftreffende Licht reflektieren und durch den Faserkern leiten.

Diese Fasertechnologie verspricht eine niedrige optische Dämpfung, ein sehr breites Transmissionsspektrum (auch im UV- oder IR-Wellenlängenbereich) und eine geringe Latenz bei der Datenübertragung.

Potentielle Anwendungen der Hohlkernfasern liegen auf dem Gebiet der Datenübertragung, der Hochleistungsstrahlführung, beispielsweise zur Materialbearbeitung, der Modalfilterung, der nichtlinearen Optik, insbesondere zur Superkontinuumserzeugung, vom ultravioletten bis infraroten Wellenlängenbereich.

### Stand der Technik

Ein Nachteil Antiresonanter Hohlkernfasern liegt darin, dass Moden höherer Ordnung nicht zwangsläufig unterdrückt werden, so dass sie über große Übertragungslängen häufig nicht rein einmodig sind und sich die Qualität des Ausgangsstrahls verschlechtert.

Im Paper von Francesco Poletti "Nested antiresonant nodeless hollow core fiber"; Optics Express, Vol. 22, No. 20 (2014); DOI: 10.1364/OE 22.023807, wird ein Faserdesign vorgeschlagen, bei dem Antiresonanzelemente nicht als einfaches singuläres Strukturelement ausgebildet sind, sondern sich aus mehreren, miteinander verschachtelten (englisch: nested) Strukturelementen zusammensetzen. Die verschachtelten Antiresonanzelemente sind so ausgelegt, dass Kernmoden höherer Ordnung phasenangepasst an die Mantelmoden sind und unterdrückt werden, aber nicht die fundamentale Kernmode. Dadurch ist die Ausbreitung der fundamentalen Kernmode stets gewährleistet und die Hohlkernfaser kann über einen begrenzten Wellenlängenbereich effektiv einmodig gemacht werden.

Die effektive Modenunterdrückung hängt von der Mittenwellenlänge des übertragenen Lichts und von Strukturparametern des Faserdesigns ab, wie dem Radius des Hohlkerns und der Durchmesserdifferenz von verschachtelten Ringstrukturen in den Antiresonanzelementen.

Aus der EP 3 136 143 A1 ist eine Antiresonante Hohlkernfaser bekannt (dort bezeichnet als "Hohlkernfaser ohne Bandlücke"), bei der der Kern neben der Fundamentalmode noch weitere Moden leiten kann. Zu diesem Zweck ist er von einem inneren Mantel mit "nicht-resonanten Elementen" umgeben, die eine Phasenanpassung von antiresonanten Moden mit den höheren Moden liefern. Die Herstellung der Hohlkernfaser erfolgt nach einer sogenannten "stack-and-draw-Technik", indem die Ausgangselemente zu einem achsenparallelen Ensemble angeordnet und zu einer Vorform fixiert werden und die Vorform anschließend elongiert wird. Hierbei wird ein Hüllrohr mit hexagonalem Innenquerschnitt verwendet und in den Innenkanten des Hüllrohres werden sechs sogenannte "ARE-Vorformen" (Anti-Resonanz-Element-Vorformen) fixiert. Diese Vorform wird in zwei Stufen zu einer Hohlkernfaser ausgezogen.

Aus der WO 2018/169487 A1 ist ein Verfahren zur Herstellung einer Vorform für antiresonante Hohlkernfasern bekannt, bei dem ein erster Mantelbereich eine Vielzahl an Stäben und ein zweiter Mantelbereich eine Vielzahl von Rohren umfasst, die von einem äußeren Hüllrohr umgeben sind. Stäbe, Rohre und Hüllrohr werden mittels "Stack and draw"-Technik zur Bildung einer Vorform zusammengefügt. Vor dem Elongieren der Vorform wird das Vorformende versiegelt, was durch Aufbringen einer Siegelmasse geschieht. Als Siegelmasse wird beispielsweise ein UV-Kleber eingesetzt.

A. F. Kosolapov et al.: "Hollow-core revolver fibre with a doublecapillary reflective cladding", Quantum Electronics, Vol. 46., No. 3, 29. March 2016 (2016-03-29), Pages 267-270, DOI: 10.1070/QEL15972, beschreibt ein Verfahren zur Herstellung einer Antiresonanten Hohlkernfaser durch Bereitstellen eines Hüllrohres und einer Anzahl von Antiresonanzelement-Vorformlingen, die als Doppelrohr aus ARE-Außenrohr und einem an dessen Innenwandung angeschweißtem ARE-Innenrohr zusammengesetzt sind. Das Doppelrohr wird elongiert und zeigt danach einen ovalen Querschnitt. Fünf der ovalen Doppelrohre werden an der Innenseite des Hüllrohres montiert. Dabei wird zwischen benachbarten Doppelrohren jeweils eine speziell angefertigte Quarzglasplatte mit einer Dicke von 1 ,27mm positioniert. Die Doppelrohre werden anschließend mit der Hüllrohr-Innenseite verschweißt. Die so erzeugte primäre Vorform wird zu einer sekundären Vorform elongiert und daraus die Hohlkernfaser gezogen.

In der US 2005/226578 A1 wird zur Herstellung einer photonischen optischen Faser ein rohrförmiges Ensemble von rohr- und stabförmigen Elementen erzeugt, wobei Leerräume zwischen den Elementen mit einer Füllmasse aufgefüllt werden. Die Füllmasse wird aus der Gasphase abgeschieden oder aus der Flüssigphase erzeugt, beispielsweise mittels eines SiO2-Partikel enthaltenden, kolloidalen Sols. Das Auffüllen der Leerräume mit der Füllmasse erfolgt von der Ensemble-Innenbohrung ausgehend. Die Füllmasse dient der Fixierung der Elemente und kann auch zur Befestigung einer Innenkapillare genutzt werden.

### Technische Aufgabenstellung

Antiresonante Hohlkernfasern und insbesondere solche mit verschachtelten Strukturelementen haben komplexe Innengeometrien, was ihre exakte und reproduzierbare Herstellung erschwert. Dies gilt umso mehr, da zur Einhaltung der Resonanzbeziehungsweise Antiresonanzbedingungen bereits geringe Maßabweichungen in der Größenordnung der Arbeitswellenlänge des zu führenden Lichts nicht tolerierbar sind. Abweichungen von der Soll-Geometrie können ihre Ursache bei der Konfiguration der Faser-Vorform haben, und sie können auch durch ungewollte nichtmaßstäbliche Verformungen beim Faserziehprozess auftreten.

Bei der bekannten "Stack-and-Draw"-Technik sind viele Elemente positionsgenau zusammenzufügen. Beispielsweise müssen zur Herstellung der aus dem eingangs genannten Paper bekannten Hohlkernfaser im "NANF"-Design sechs Antiresonanzelement-Vorformlinge, jeweils bestehend aus einem ARE-Außenrohr und einseitig an der ARE-Außenrohr-Innenmantelfläche eingeschweißtem ARE-Innenrohr, an der Innenseite eines Hüllrohrs angebracht werden.

Zur Realisierung geringer Dämpfungswerte und breiter Transmissionsbereiche ist neben einer gleichmäßigen Wandstärke der Wandungen der Antiresonanzelemente auch die azimutale Position der Antiresonanzelemente innerhalb des Hüllrohres wichtig. Dies ist mit der "Stack-and-Draw"-Technik nicht ohne Weiteres zu realisieren. Ziel der Erfindung ist, ein Verfahren zur kostengünstigen Herstellung einer Antiresonanten Hohlkernfaser anzugeben, das Beschränkungen herkömmlicher Herstellungsverfahren vermeidet.

Insbesondere ist es Ziel der Erfindung, ein Verfahren zur Herstellung einer Antiresonanten Hohlkernfaser und einer Vorform für Antiresonante Hohlkernfasern bereitzustellen, mit dem reproduzierbar eine hohe Präzision der Strukturelemente und eine exakte Positionierung der Antiresonanzelemente in der Faser in einer ausreichend stabilen und reproduzierbaren Weise erreicht werden kann.

Außerdem sollen Nachteile der klassischen "Stack and Draw"-Technik, mit der die erforderlichen Strukturgenauigkeiten, insbesondere eine gleichmäßige Wandstärke der Antiresonanzelemente und eine exakte Positionierung an vorgegebenen azimutalen Positionen nicht einfach zu erreichen ist, möglichst vermieden werden.

### Zusammenfassung der Erfindung

Hinsichtlich des Verfahrens zur Herstellung der Antiresonanten Hohlkernfaser wird diese Aufgabe ausgehend von einem Verfahren der eingangs genannten Gattung erfindungsgemäß dadurch gelöst, dass zum Anordnen der Antiresonanzelement-Vorformlinge gemäß Verfahrensschritt (c) in die Hüllrohr-Innenbohrung eine Positionierungsschablone eingesetzt wird, die Halteelemente zur Positionierung der Antiresonanzelement-Vorformlinge an den Soll-Positionen aufweist, und dass die Positionierungsschablone mindestens ein Rastmittel aufweist, das mit einem Rastmittel-Gegenstück in der Hüllrohr-Wandung unter Ausbildung einer kraft- und/oder formschlüssigen Verbindung zusammenwirkt.

Ausgangspunkt für die Herstellung der Antiresonanten Hohlkernfaser ist eine Vorform, die hier auch als "Cane" oder als "primäre Vorform" bezeichnet wird. Sie umfasst ein Hüllrohr, in dem oder an dem Vorstufen oder Vorformlinge für die Ausformung Antiresonananter Elemente in den Hohlkernfasern (hier kurz als "Antiresonanzelemente" bezeichnet) enthalten sind. Die primäre Vorform kann zu der Hohlkernfaser elongiert werden; in der Regel wird der primären Vorform aber zusätzliches Mantelmaterial hinzugefügt, um daraus eine hier als "sekundäre Vorform" bezeichnete Vorform zu erzeugen. Gegebenenfalls wird die Hohlkernfaser durch Elongieren der sekundären Vorform erzeugt. Alternativ werden die primäre Vorform oder die sekundäre Vorform unter Ausbildung eines koaxialen Ensembles von Bauteilen mit einem Überfangzylinder oder mit mehrere Überfangzylindern umgeben und das koaxiale Ensemble direkt zu der Hohlkernfaser elongiert. Der allgemeine Begriff "Vorform" wird hier zur Bezeichnung desjenigen Bauteils oder desjenigen koaxialen Ensembles von Bauteilen verstanden, aus der die Hohlkernfaser letztlich gezogen wird.

Das Hinzufügen von Mantelmaterial erfolgt beispielsweise durch Aufkollabieren eines Überfangzylinders auf die primäre Vorform. Die koaxiale Anordnung aus primärer Vorform und Überfangzylinder wird beim Aufkollabieren des Überfangzylinders elongiert, oder sie wird nicht elongiert. Dabei werden die Antiresonanzelement-Vorformlinge in ihrer Form oder Anordnung verändert, oder sie werden in ihrer Form oder Anordnung nicht verändert

Die Genauigkeit der Positionierung der Vorformlinge an der Innenmantelfläche des Hüllrohres wird verbessert, indem zum Anordnen der Antiresonanzelement-Vorformlinge eine Positionierungsschablone eingesetzt wird.

Zur Fixierung der Positionierungsschablone am Hüllrohr weist sie mindestens ein Rastmittel auf, das mit einem Rastmittel-Gegenstück in der Hüllrohr-Wandung unter Ausbildung einer kraft- und/oder formschlüssigen Verbindung zusammenwirkt.

Bei dem Rastmittel und dem Gegenstück handelt es sich beispielsweise um ein System aus Haken/Öse, Feder/Nut oder dergleichen, vorzugsweise um eine Steckverbindung, die möglichst einfach an der Hüllrohrwandung anzubringen oder in die Hüllrohrwandung einzubringen ist.

So hat es sich beispielsweise als vorteilhaft erwiesen, wenn das Rastmittel-Gegenstück in der Stirnseite der Hüllrohr-Wandung angeordnet und das Rastmittel darin vollständig versenkbar ist.

Die Hüllrohr-Stirnseite behält so ihre Ebenheit, was die Verbindung mit anderen Bauteilen, wie etwa die Klebeverbindung mit einem rohrförmigen Halter erleichtert.

Es ist vorteilhaft, wenn das Rastmittel-Gegenstück nicht bis zur Hüllrohr-Außenseite reicht und diese nicht durchbricht.

Die Positionierungsschablone weist beispielsweise einen in die Hüllrohr-Innenbohrung ragenden Schaft auf, der mit Halteelementen in Form mehrerer radial nach außen weisender Haltearme versehen ist.

Die konstruktiv vorgegebene sternförmige Anordnung der Halteelemente erleichtert die exakte Positionierung der Antiresonanzelement-Vorformlinge an den jeweiligen Soll-Positionen und deren Fixierung.

Bei einer bevorzugten Verfahrensweise sind die Antiresonanzelement-Vorformlinge rohrförmig mit einer Rohraußenmantelfläche ausgebildet, wobei jedes Halteelement mindestens zwei Kontaktpunkte mit der Rohraußenmantelfläche des zu haltenden Antiresonanzelement-Vorformlings aufweist.

Zwei Kontaktpunkte genügen für eine definierte und stabile Positionierung des Antiresonanzelement-Vorformlings, so dass ein Ausweichen des Antiresonanzelement-Vorformlings bei der Fixierung an der Innenmantelfläche unterbunden werden kann.

Dabei wird die Positionierungsschablone vorzugsweise ausschließlich im Bereich der Hüllrohr-Stirnseiten eingesetzt, vorzugsweise im Bereich beider Hüllrohr-Stirnseiten.

Dadurch wird der flächige Kontakt der Positionierungsschablone mit den Antiresonanzelement-Vorformlingen auf das Notwendige beschränkt. Außerdem kann die Positionierungsschablone bei der weiteren Handhabung und Verarbeitung der primären Vorform auch in der Innenbohrung des Hüllrohres verbleiben, so dass die Position der Antiresonanzelement-Vorformlinge stabil bleibt.

Besonders bewährt haben sich Positionierungsschablonen aus Graphit oder aus Glas, vorzugsweise aus Quarzglas.

Positionierungsschablonen aus diesen Werkstoff en lassen sich in großer Reinheit und mit einer großen Genauigkeit mit einer Maßabweichung von weniger als +/-0,1 mm maschinell fertigen. Sie zeigen eine hohe Temperaturstabilität und sie verhalten sich inert gegenüber dem Werkstoff der Hohlkernfaser, insbesondere gegenüber Glas.

Die Genauigkeit der Positionierung der Vorformlinge an der Innenmantelfläche des Hüllrohrs wird verbessert, indem die Hüllrohr-Innenseite durch spanende Bearbeitung erzeugt wird, insbesondere durch Bohren, Fräsen, Schleifen, Honen und/oder Polieren.

Diese Bearbeitungstechniken liefern im Vergleich zu anderen bekannten Umformtechniken unter Einsatz von Hitze und Druck genauere und filigranere Strukturen und sie vermeiden Verunreinigungen der Oberflächen durch Formwerkzeuge, wie beispielsweise Düsen, Pressen oder Schmelzformen.

Die spanende mechanische Bearbeitung umfasst vorzugsweise auch eine Strukturierung der Hüllrohr-Innenseite im Bereich von Soll-Positionen der Antiresonanzelement-Vorformlinge, indem diese mit einer sich in Richtung der Hüllrohr-Längsachse erstreckenden Längsstruktur versehen wird. Diese Längsstruktur umfasst beispielsweise Längsschlitze und/oder oder Längsrillen in der Hüllrohr-Innenwandung, die parallel zur Hüllrohr-Längsachse verlaufen und die bevorzugt durch Bohren, Sägen, Fräsen Schneiden oder Schleifen erzeugt werden.

Die sich in Richtung der Hüllrohr-Längsachse erstreckende Längsstruktur dient als Positionierungshilfe für die Antiresonanzelement-Vorformlinge. Sie erleichtert, dass die Antiresonanzelement-Vorformlinge vorgegebene definierte Positionen an der Innenseite des Hüllrohres einnehmen.

Insbesondere im Fall durchgehender Längsschlitze ist es vorteilhaft, wenn das Hüllrohr stirnseitige Enden aufweist, wobei die Längsschlitze vor den stirnseitigen Enden enden. Längsrillen, die die Hüllrohr-Wandung nicht durchbrechen, reichen hingegen bevorzugt bis zu den stirnseitigen Enden.

Bei einer bevorzugten Verfahrensvariante weist die Längsstruktur um den Umfang der Hüllrohr-Wandung verteilte Längsschlitze auf, wobei die Antiresonanzelement-Vorformlinge an einem Längsschlitz angeordnet sind.

Die Längsschlitze durchdringen die Hüllrohrwandung von innen nach außen, mit Ausnahme der beiden stirnseitigen Endbereiche des Hüllrohres. Sie haben parallele Längskanten und sie weisen eine maximale Schlitzbreite S_{B} auf, wobei die Antiresonanzelement-Vorformlinge vorzugsweise mit den Längskanten verbunden werden. Die Antiresonanzelement-Vorformlinge haben dabei eine Breitenabmessung, die größer ist als die maximale Breite Se, so dass sie nicht vollständig in die Längsschlitze eintauchen. Der Bereich unterhalb der Längskanten bildet einen Hohlraum, in den ein Gas eingeleitet oder aus dem ein Gas abgesaugt werden kann.

Bei einer bevorzugten Verfahrensvariante umfasst das Anordnen der Antiresonanzelement-Vorformlinge an Soll-Positionen der Innenseite der Hüllrohr-Wandung und/oder das Ziehen der Hohlkernfaser gemäß Verfahrensschritt (c) eine Fixierungs-Maßnahme und/oder eine Versiegelungsmaßnahme unter Einsatz einer amorphe SiO₂-Partikel enthaltenden Versiegelungs- oder Verbindungsmasse.

Die zum Versiegeln oder Fixieren eingesetzte Versiegelungs- oder Verbindungsmasse enthält amorphe SiO₂-Partikel, die beispielsweise in einer Dispersionsflüssigkeit aufgenommen sind. Diese Masse wird zwischen den zu verbindenden beziehungsweise zu versiegelnden Flächen aufgetragen und ist beim Einsatz in der Regel pastös. Beim Trocknen bei niedriger Temperatur wird die Dispersionsflüssigkeit teilweise oder vollständig entfernt und die Masse verfestigt. Die Versiegelungs- oder Verbindungsmasse und insbesondere die nach dem Trocknen erhaltene, verfestigte SiO₂-haltige Versiegelungs- oder Verbindungsmasse genügt den Anforderungen zur Fixierung und Verdichtung. Die zum Trocknen erforderliche Temperatur liegt unterhalb von 300 °C, was die Einhaltung der Maßhaltigkeit der Vorform begünstigt und thermische Beeinträchtigungen vermeidet. Ein Erhitzen auf höhere Temperaturen um 800 °C, beispielsweise beim Elongieren der Vorform zur Hohlkernfaser, führt zu einer weiteren thermischen Verfestigung der Versiegelungs- oder Verbindungsmasse, die auch geeignet ist, opakes oder transparentes Glas zu bilden. Dies geschieht durch Sintern oder Verglasen, wobei das Sintern zu opakem Glas vergleichsweise niedrigere Temperaturen und/oder kurze Erhitzungsdauern erfordert als ein Verglasen bis zur vollständigen Transparenz. Die Versiegelungs- oder Verbindungsmasse kann somit durch Erwärmen vollständig verdichtet und durch Erhitzen beim Heißformprozess verglast werden. Dabei verhält sich die Versiegelungs- oder Verbindungsmasse wie Quarzglas; sie wird viskos und verformbar.

Beim Heißformprozess zersetzt sich die Versiegelungs- oder Verbindungsmasse nicht und sie setzt wenig an Verunreinigungen frei. Sie zeichnet sich somit durch thermische Stabilität und Reinheit beim Heißformprozess aus und sie vermeidet Verformungen infolge unterschiedlicher thermischer Ausdehnungskoeffizienten.

Bei einer bevorzugten Verfahrensvariante umfasst das Anordnen der Antiresonanzelement-Vorformlinge an Soll-Positionen der Innenseite der Hüllrohr-Wandung und/oder das Elongieren oder Weiterverarbeiten der primären Vorform gemäß Verfahrensschritt (d) eine Fixierungs-Maßnahme und/oder eine Versiegelungsmaßnahme unter Einsatz einer amorphe SiO₂-Partikel enthaltenden Versiegelungs- oder Verbindungsmasse.

Die zum Versiegeln oder Fixieren eingesetzte Versiegelungs- oder Verbindungsmasse enthält amorphe SiO₂-Partikel, die beispielsweise in einer Dispersionsflüssigkeit aufgenommen sind. Diese Masse wird zwischen den zu verbindenden beziehungsweise zu versiegelnden Flächen aufgetragen und ist beim Einsatz in der Regel pastös. Beim Trocknen bei niedriger Temperatur wird die Dispersionsflüssigkeit teilweise oder vollständig entfernt und die Masse verfestigt. Die Versiegelungs- oder Verbindungsmasse und insbesondere die nach dem Trocknen erhaltene, verfestigte SiO₂-haltige Versiegelungs- oder Verbindungsmasse genügt den Anforderungen zur Fixierung und Verdichtung. Die dafür erforderliche niedrige Temperatur unterhalb von 300 °C begünstigt die Einhaltung der Maßhaltigkeit der Vorform und vermeidet thermische Beeinträchtigungen. Durch Erhitzen auf höhere Temperaturen, beispielsweise beim Elongieren der Vorform zur Hohlkernfaser, ist die Versiegelungs- oder Verbindungsmasse auch geeignet, opakes oder transparentes Glas zu bilden. Dies geschieht durch Sintern oder Verglasen, wobei das Sintern zu opakem Glas vergleichsweise niedrigere Temperaturen und/oder kurze Erhitzungsdauern erfordert als ein Verglasen bis zur vollständigen Transparenz. Die Versiegelungs- oder Verbindungsmasse kann somit durch Erwärmen verdichtet und durch Erhitzen beim Heißformprozess verglast werden.

Beim Heißformprozess zersetzt sich die Versiegelungs- oder Verbindungsmasse nicht und sie setzt wenig an Verunreinigungen frei. Sie zeichnet sich somit durch thermische Stabilität und Reinheit beim Heißformprozess aus und sie vermeidet Verformungen infolge unterschiedlicher thermischer Ausdehnungskoeffizienten.

Insbesondere im Hinblick auf eine geringe optische Dämpfung und eine große optische Übertragungs-Bandbreite der Hohlkernfaser hat es sich als besonders vorteilhaft erwiesen, wenn die Antiresonanzelement-Vorformlinge um den Hohlkern mit einer ungeradzahligen Symmetrie angeordnet sind.

Hinsichtlich der Herstellung der Vorform für die Hohlkernfaser wird die oben angegebene technische Aufgabe ausgehend von einem Verfahren der eingangs genannten Gattung erfindungsgemäß dadurch gelöst, dass das Anordnen der Antiresonanzelement-Vorformling gemäß Verfahrensschritt (c) mittels einer in die Hüllrohr-Innenbohrung eingesetzten Positionierungsschablone erfolgt, die Halteelemente zur Positionierung der Antiresonanzelement-Vorformlinge an den Soll-Positionen aufweist, und dass die Positionierungsschablone mindestens ein Rastmittel aufweist, das mit einem Rastmittel-Gegenstück in der Hüllrohr-Wandung unter Ausbildung einer kraft- und/oder formschlüssigen Verbindung zusammenwirkt.

Die Vorform ist Ausgangspunkt für die Herstellung der Antiresonanten Hohlkernfaser. Durch Elongieren der primären Vorform wird entweder direkt die Antiresonante Hohlkernfaser gezogen oder es wird zunächst durch Weiterverarbeitung der primären Vorform ein anderes Halbzeug erzeugt, das hier auch als "sekundäre Vorform" bezeichnet wird, und aus der die Antiresonante Hohlkernfaser gezogen werden kann.

In jedem Fall umfasst die Herstellung der Vorform den Einbau und das Verbinden von Antiresonanzelement-Vorformlingen mit einem Hüllrohr. Die Genauigkeit der Positionierung der Vorformlinge wird verbessert, indem zum Anordnen der Antiresonanzelement-Vorformlinge eine Positionierungsschablone eingesetzt wird. Eine zusätzliche Verbesserung wird erreicht, indem das Hüllrohr vorab strukturiert wird.

Maßnahmen zur Herstellung der Vorform sind weiter oben im Zusammenhang der Herstellung der Hohlkernfaser erläutert und diese Erläuterungen werden hiermit einbezogen.

### Definitionen

Einzelne Verfahrensschritte und Begriffe der obigen Beschreibung werden im Folgenden ergänzend definiert. Die Definitionen sind Bestandteil der Beschreibung der Erfindung. Bei einem sachlichen Widerspruch zwischen einer der folgenden Definitionen und der übrigen Beschreibung ist das in der Beschreibung Gesagte maßgeblich.

### Antiresonanzelemente

Die Antiresonanzelemente können einfache oder verschachtelte Strukturelemente der Hohlkernfaser sein. Sie haben mindestens zwei Wandungen, die aus Richtung des Hohlkerns gesehen eine negative Krümmung haben (konvex) oder keine Krümmung haben (plan, gerade). Sie bestehen in der Regel aus einem Material, das für das Arbeitslicht transparent ist, beispielsweise aus Glas, insbesondere aus dotiertem oder nicht dotiertem SiO₂, einem Kunststoff, insbesondere aus einem Polymer, aus einem Verbundwerkstoff oder aus kristallinem Material.

### Antiresonanzelement-Vorformling / Antiresonanzelement-Vorstufe

Als Antiresonanzelement-Vorformlinge werden Bauteile oder Bestandteile der Vorform bezeichnet, die im Wesentlichen durch einfaches Langziehen beim Faserziehprozess zu Antiresonanzelementen in der Hohlkernfaser werden. Als Antiresonanzelement-Vorstufen werden Bauteile oder Bestandteile der Vorform bezeichnet, die erst durch Umformung zu Antiresonanzelement-Vorformlingen oder direkt zu Antiresonanzelementen werden. Die Antiresonanzelement-Vorformlinge können einfache oder verschachtelte Bauteile sein, an denen zusätzlich Positionierhilfen fixiert sein können. Sie liegen ursprünglich in der primären Vorform (Cane) vor.

Durch Weiterverarbeitung der primären Vorform, insbesondere durch Heißumformschritte, können Zwischenprodukte entstehen, in denen die ursprünglichen Antiresonanzelement-Vorformlinge in einer gegenüber der ursprünglichen Form veränderten Form vorliegen. Die veränderte Form wird hier ebenfalls als Antiresonanzelement-Vorformling oder auch als Antiresonanzelement-Vorstufe bezeichnet.

### Vorform / primäre Vorform / sekundäre Vorform

Die Vorform ist dasjenige Bauteil, aus dem die Antiresonante Hohlkernfaser gezogen wird. Es ist eine primäre Vorform oder eine durch Weiterverarbeitung der primären Vorform erzeugte sekundäre Vorform. Die Weiterverarbeitung der primären Vorform zu einer sekundären Vorform, aus der die Hohlkernfaser gezogen wird, kann eine einmalige oder wiederholte Durchführung von einem oder mehreren der folgenden Heißformprozesse umfassen:
(i) Elongieren,
(ii) Kollabieren,
(iii) Kollabieren und gleichzeitiges Elongieren,
(iv) Aufkollabieren von zusätzlichem Mantelmaterial,
(v) Aufkollabieren von zusätzlichem Mantelmaterial und anschließendes Elongieren,
(vi) Aufkollabieren von zusätzlichem Mantelmaterial und gleichzeitiges Elongieren.

### Elongieren / Kollabieren

Beim Elongieren wird die primäre Vorform gelängt. Die Längung kann ohne gleichzeitiges Kollabieren erfolgen. Das Elongieren kann maßstäblich erfolgen, so dass sich beispielsweise die Form und Anordnung von Bauteilen oder Bestandteilen der primären Vorform im elongierten Endprodukt widerspiegeln. Beim Elongieren kann die primäre Vorform aber auch nicht-maßstäblich gezogen und ihre Geometrie verändert werden.

Beim Kollabieren wird eine Innenbohrung verengt oder Ringspalte zwischen rohrförmigen Bauteil werden geschlossen oder verengt. Das Kollabieren geht in der Regel mit einem Elongieren einher.

### Hohlkern / Innerer Mantelbereich / Äußerer Mantelbereich / Cane

Das Ensemble aus mindestens einem Hüllrohr und darin lose aufgenommenen oder fest fixierten Vorformlingen oder Vorstufen für Antiresonanzelemente wird hier auch als "primäre Vorform" oder "Cane" bezeichnet. Die primäre Vorform (Cane) umfasst den Hohlkern und einen Mantelbereich. Dieser Mantelbereich wird auch als "innerer Mantelbereich" bezeichnet, wenn es auch einen "äußeren Mantelbereich" gibt, der beispielsweise durch Aufkollabieren auf den Cane erzeugt worden ist, und wenn zwischen diesen Mantelbereichen unterschieden werden soll. Die Bezeichnungen "innerer Mantelbereich" und "äußerer Mantelbereich" werden auch für die entsprechenden Bereiche in der Hohlkernfaser oder in Zwischenprodukten genutzt, die durch Weiterverarbeitung der primären Vorform erhalten werden.

Die Bezeichnung "Rohrinnenseite" wird auch als Synonym für "Rohr-Innenmantelfläche" und die Bezeichnung "Rohraußenseite" wird auch als Synonym für "Rohr-Außenmantelfäche" verwendet. Der Begriff "Innenbohrung" in Verbindung mit einem Rohr besagt nicht, dass die Innenbohrung durch einen Bohrvorgang erzeugt worden ist.

### Spanende Bearbeitung

Darunter werden trennende mechanische Fertigungsverfahren zur trennenden Bearbeitung eines Werkstücks verstanden, insbesondere Drehen, Schneiden, Bohren, Sägen, Fräsen und Schleifen. Durch diese Bearbeitung wird eine sich in Richtung der Hüllrohr-Längsachse erstreckende Längsstruktur geschaffen, die als Positionierungshilfe für die Antiresonanzelement-Vorformlinge dient. Die Längsstruktur ist von der Hüllrohr-Innenseite zugänglich; sie kann sich auch bis zur Außenseite durch die gesamte Hüllrohr-Wandung erstrecken.

### Teilchengröße und Teilchengrößenverteilung

Teilchengröße und Teilchengrößenverteilung der SiO₂-Partikel werden anhand der D₅₀-Werte charakterisiert. Diese Werte werden aus Partikelgrößen-Verteilungskurven entnommen, die das kumulative Volumen der SiO₂-Partikel in Abhängigkeit von der Partikelgröße zeigen. Die Teilchengrößenverteilungen werden häufig anhand der jeweiligen D₁₀-, D₅₀- und D₉₀-Werte charakterisiert. Dabei kennzeichnet der D₁₀-Wert diejenige Teilchengröße, die von 10% des kumulativen Volumens der SiO₂-Teilchen nicht erreicht wird, und dementsprechend der D₅₀-Wert und der D₉₀-Wert diejenige Partikelgrößen, die von 50% beziehungsweise von 90% des kumulativen Volumens der SiO₂-Partikel nicht erreicht wird. Die Partikelgrößenverteilung wird durch Streulicht- und Laserbeugungsspektroskopie nach ISO 13320 ermittelt.

### Ausführungsbeispiel

Nachfolgend wird die Erfindung anhand eines Ausführungsbeispiels und einer Zeichnung näher erläutert. Im Einzelnen zeigt in schematischer Darstellung
- **Figur 1**: Ausführungsformen von Positionierungsschablonen in einer Ansicht auf die Oberseite,
- **Figur 2**: Verfahrensschritte zum Positionieren von Antiresonanzelement-Vorformlingen an der Innenmantelfläche eines Hüllrohres unter Einsatz einer Positionierungsschablone,
- **Figur 3**: einen Längsschnitt entlang der Schnittlinie S1 durch das Hüllrohr von Figur 2(a) mit einer stirnseitigen Nut zur Aufnahme einer Positionierungsschablone,
- **Figur 4**: einen Längsschnitt entlang der Schnittlinie S2 durch das Hüllrohr von Figur 2(b) mit eingelegter Positionierungsschablone, und
- **Figur 5**: Ausführungsformen von Hüllrohren mit zusätzlichen Längsstrukturen zur Positionierung von Antiresonanzelement-Vorformlingen.

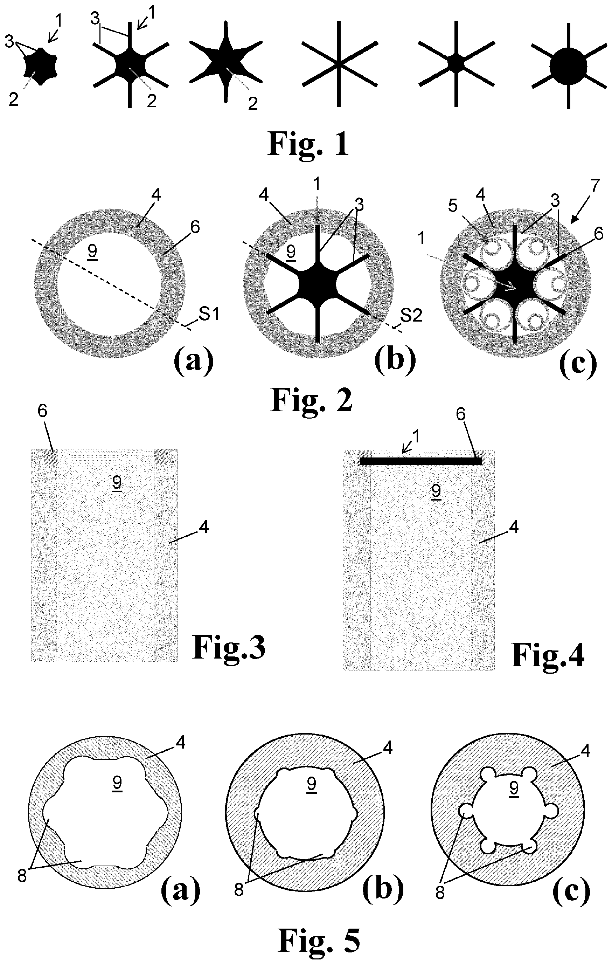

Figur 1 und Figur 5 sind als solche außerhalb des Schutzumfangs der Ansprüche.

Bei der Herstellung der Hohlkernfaser beziehungsweise der Vorform für die Hohlkernfaser sind eine Vielzahl von Bauteilen miteinander zu verbinden. Darüber hinaus kann es bei der Durchführung von Heißformprozessen hilfreich sein, vorhandene Spalte oder Kanäle der Vorform zu versiegeln. Zum Verbinden beziehungsweise zur Versiegelung wird eine auf SiO₂ basierende Versiegelungs- oder Verbindungsmasse eingesetzt, wie sie aus der DE 10 2004 054 392 A1 bekannt ist. Dabei wird durch Nassvermahlen von Quarzglaskörnung ein wässriger Schlicker erzeugt, der amorphe SiO₂-Partikel mit einer Partikelgrößenverteilung enthält, die durch einen D₅₀-Wert von etwa 5 µm und durch einen D₉₀-Wert von etwa 23 µm gekennzeichnet ist. Dem Basisschlicker wird weitere amorphe SiO₂-Körnung mit einer mittleren Korngröße von etwa 5 µm zugemischt. Der als Verbindungsmasse eingesetzte Schlicker hat einen Feststoffgehalt von 90%, der zu mindestens 99,9 Gew.-% aus SiO₂ besteht.

**Figur 1** zeigt schematisch mehrere in der Draufsicht sternförmige Ausführungsformen der Positionierungsschablone 1 zum Einsatz beim erfindungsgemäßen Verfahren. Jede Positionierungsschablone 1 hat einen zentralen Bereich (Schaft 2), von dem aus sich radial nach außen weisende - mehr oder weniger ausgeprägte - Haltearme 3 erstrecken.

**Figur 2** zeigt Verfahrensschritte zum Einbau der Positionierungsschablone in ein Hüllrohr 4 und zur Positionierung von Antiresonanzelement-Vorformlingen 5 mittels der Positionierungsschablone 1. Die Innenmantelfläche und die Außenmantelfläche des Hüllrohres 4 sind durch Schleifen, Honen und Polieren mechanisch bearbeitet und auf Endmaß gebracht. Gleichzeitig wurde eine Strukturierung der Hüllrohr-Innenseite im Bereich von Soll-Positionen der Antiresonanzelement-Vorformlinge 5 vorgenommen, die weiter unten noch näher erläutert wird.

Figur 2(a) und der dazugehörige Längsschnitt von **Figur 3** zeigen, dass an den Stirnseiten des Hüllrohres 4, von der Innenmantelfläche aus Nuten 6 eingefräst sind. Die Nuten 6 haben eine Breite und eine Tiefe von jeweils 2 mm. Sie durchstoßen nicht die Außenmantelfläche des Hüllrohres 4. Sie dienen zur Aufnahme der Arme 3 einer Positionierungsschablone 1, die in den Bereich der Stirnseite des Hüllrohres 4 in die Innenbohrung 9 eingelegt wird. Die Nuten 6 sind an die Abmessungen der Haltearme 3 angepasst und wirken insoweit als Gegenrastmittel für die aufzunehmenden Haltearme 3 (Feder). Dies ist schematisch in Figur 2(b) und in dem dazugehörigen Längsschnitt von **Figur 4** gezeigt. Die Enden der Haltearme 3 werden in den Nuten 6 vollständig aufgenommen, so dass sie nicht die Hüllrohr-Stirnseite überragen und insoweit deren Ebenheit nicht beeinträchtigen.

In Figur 2(c) ist dargestellt, dass zwischen den Haltearmen 3 Antiresonanzelement-Vorformlinge 5 positioniert werden. Die Antiresonanzelement-Vorformlinge 5 liegen dabei sowohl an den Haltearmen 3 an, als auch an dem Schaft 2, so dass sie gegen Verrutschen in peripherer als auch in radialer Richtung gesichert sind.

Die Fixierung der Antiresonanzelement-Vorformlinge 4 an der Innenwand des Hüllrohrs 4 erfolgt mittels der oben beschriebenen, auf SiO₂ basierenden Verbindungsmasse. Die Verbindungsmasse wird lokal im Bereich der stirnseitigen Enden des Antiresonanzelement-Vorformling 5 aufgetragen und die Antiresonanzelement-Vorformlinge werden darauf unter Einsatz der Positionierungs-Schablone 1 aufgesetzt. Die Positionierungs-Schablone 1 ist dabei auf den Bereich um die beiden stirnseitigen Hüllrohr-Enden beschränkt.

Durch diese Methode wird eine genaue und reproduzierbare Verbindung zwischen Hüllrohr 4 und Antiresonanzelement-Vorformlingen 5 geschaffen. Zur Fixierung genügt eine Verfestigung der Verbindungsmasse bei niedriger Temperatur unterhalb von 300 °C, so dass eine starke Erwärmung der umliegenden Bereiche und somit wird eine Verformung Antiresonanzelement-Vorformlinge 5 vermieden wird.

Das Hüllrohr 4 besteht aus Quarzglas. Es hat eine Länge von 500 mm, einen Außendurchmesser von 73 mm und einen Innendurchmesser von 24 mm. Das Ensemble 7 aus Hüllrohr 4 und darin positionierten Antiresonanzelement-Vorformlingen 5, wird hier als "primäre Vorform" und häufig auch als "Cane" bezeichnet.

**Figur 5** zeigt weitere Ausführungsformen von Hüllrohren 4 in einer Ansicht auf die Hüllrohr-Stirnseite. Die Hüllrohre 4 haben an der Innenmantelfläche der Hüllrohr-Wandung jeweils Längsrillen 8. Die Längsrillen 8 sind in sechszähliger Symmetrie gleichmäßig um den Innenumfang des jeweiligen Hüllrohres 4 verteilt. Sie dienen als zusätzliche Positionierhilfen für die Antiresonanzelement-Vorformlinge 5.

**Figur 5(a)** zeigt flache, breite im Querschnitt schalenförmige Längsrillen 8, die durch Fräsen erzeugt sind. **Figur 5(b)** zeigt flache, enge und im Querschnitt halbkreisförmige Längsrillen 8, die ebenfalls durch Fräsen erzeugt sind. **Figur 5(c)** zeigt tiefe, enge und im Querschnitt nahezu geschlossen kreisförmige Längsrillen 8, die durch Bohren erzeugt sind. Die maximale Tiefe beträgt 3 mm und der Innendurchmesser beträgt 4 mm.

Zur Herstellung der Antiresonanten Hohlkernfaser wird die primäre Vorform 7 mit einem Überfangzylinder überfangen, um zusätzliches Mantelmaterial hinzuzufügen und um das für die Hohlkernfaser vorgegebene Kern-Mantel-Durchmesserverhältnis in der endgültigen, sekundären Vorform einzustellen.

## Patentansprüche

1. Verfahren zur Herstellung einer Antiresonanten Hohlkernfaser, die einen sich entlang einer Faser-Längsachse erstreckenden Hohlkern und einen den Hohlkern umgebenden inneren Mantelbereich aufweist, der mehrere Antiresonanzelemente umfasst, mit den Verfahrensschritten:
(a) Bereitstellen eines Hüllrohres (4), das eine Hüllrohr-Innenbohrung und eine Hüllrohr-Längsachse aufweist, entlang der sich eine von einer Innenseite und einer Außenseite begrenzte Hüllrohr-Wandung erstreckt,
(b) Bereitstellen einer Anzahl von Antiresonanzelement-Vorformlingen (5),
(c) Anordnen der Antiresonanzelement-Vorformlinge (5) an Soll-Positionen der Innenseite der Hüllrohr-Wandung unter Bildung einer primären Vorform (7) für die Hohlkernfaser, die einen hohlen Kernbereich und einen Mantelbereich aufweist und
(d) Elongieren der primären Vorform (7) zu der Hohlkernfaser oder Weiterverarbeitung der primären Vorform (7) zu einer sekundären Vorform, aus der die Hohlkernfaser gezogen wird, wobei die Weiterverarbeitung eine einmalige oder wiederholte Durchführung von einem oder mehreren der folgenden Heißformprozesse umfasst:
(i) Elongieren,
(ii) Kollabieren,
(iii) Kollabieren und gleichzeitiges Elongieren,
(iv) Aufkollabieren von zusätzlichem Mantelmaterial,
(v) Aufkollabieren von zusätzlichem Mantelmaterial und anschließendes Elongieren,
(vi) Aufkollabieren von zusätzlichem Mantelmaterial und gleichzeitiges Elongieren,
**dadurch gekennzeichnet, dass** zum Anordnen der Antiresonanzelement-Vorformlinge (5) gemäß Verfahrensschritt (c) in die Hüllrohr-Innenbohrung eine Positionierungsschablone (1) eingesetzt wird, die Halteelemente (3) zur Positionierung der Antiresonanzelement-Vorformlinge (5) an den Soll-Positionen aufweist, und dass die Positionierungsschablone (1) mindestens ein Rastmittel aufweist, das mit einem Rastmittel-Gegenstück (6) in der Hüllrohr-Wandung unter Ausbildung einer kraft- und/oder formschlüssigen Verbindung zusammenwirkt.

2. Verfahren nach Anspruch 1, **dadurch gekennzeichnet, dass** eine Positionierungsschablone (1) mit einem in die Hüllrohr-Innenbohrung ragenden Schaft (2) eingesetzt wird, der mit Halteelementen (3) in Form mehrerer radial nach außen weisender Haltearme versehen ist.

3. Verfahren nach Anspruch 1 oder 2, **dadurch gekennzeichnet, dass** die Antiresonanzelement-Vorformlinge (5) rohrförmig mit einer Rohraußenmantelfläche ausgebildet sind, und dass jedes Halteelement (3) mindestens zwei Kontaktpunkte mit der Rohraußenmantelfläche des zu haltenden Antiresonanzelement-Vorformlings (5) aufweist.

4. Verfahren nach einem der vorhergehenden Ansprüche, **dadurch gekennzeichnet, dass** die Positionierungsschablone (1) im Bereich einer Hüllrohr-Stirnseite, vorzugsweise im Bereich beider Hüllrohr-Stirnseiten, eingesetzt wird.

5. Verfahren nach Anspruch 1, **dadurch gekennzeichnet, dass** das Rastmittel-Gegenstück (6) in der Stirnseite der Hüllrohr-Wandung angeordnet und das Rastmittel darin vollständig versenkbar ist.

6. Verfahren nach Anspruch 1 oder 5, **dadurch gekennzeichnet, dass** das Rastmittel-Gegenstück (6) nicht bis zur Hüllrohr-Außenseite reicht.

7. Verfahren nach einem der vorhergehenden Ansprüche, **dadurch gekennzeichnet, dass** die Positionierungsschablone (1) aus Graphit oder aus Glas, vorzugsweise aus Quarzglas, besteht.

8. Verfahren nach einem der vorhergehenden Ansprüche, **dadurch gekennzeichnet, dass** die Positionierungsschablone (1) maschinell mit einer Maßabweichung von weniger als +/- 0,1 mm gefertigt ist.

9. Verfahren nacheinem der vorhergehenden Ansprüche, **dadurch gekennzeichnet, dass** ein Hüllrohr (5) mit kreisrundem Innenquerschnitt bereitgestellt wird, das an der Innenseite der Hüllrohr-Wandung eine Längsstruktur (8) aufweist, die als Längsrille oder als Längsschlitz ausgeführt ist.

10. Verfahren nach einem der vorhergehenden Ansprüche, **dadurch gekennzeichnet, dass** die Hüllrohr-Innenseite durch spanende Bearbeitung erzeugt wird, insbesondere durch Bohren, Fräsen, Schleifen, Honen und/oder Polieren.

11. Verfahren nach einem der vorhergehenden Ansprüche, **dadurch gekennzeichnet, dass** das Anordnen der Antiresonanzelement-Vorformlinge (5) an Soll-Positionen der Innenseite der Hüllrohr-Wandung und/oder das Elongieren oder Weiterverarbeiten der primären Vorform (7) gemäß Verfahrensschritt (d) eine Fixierungs-Maßnahme und/oder eine Versiegelungsmaßnahme unter Einsatz einer amorphe SiO₂-Partikel enthaltenden Versiegelungs- oder Verbindungsmasse umfasst.

12. Verfahren zur Herstellung einer Vorform für eine Antiresonante Hohlkernfaser, die einen sich entlang einer Faser-Längsachse erstreckenden Hohlkern und den Hohlkern umgebenden inneren Mantelbereich aufweist, der mehrere Antiresonanzelemente umfasst, mit den Verfahrensschritten:
(a) Bereitstellen eines Hüllrohres (4), das eine Hüllrohr-Innenbohrung und eine Hüllrohr-Längsachse aufweist, entlang der sich eine von einer Innenseite und einer Außenseite begrenzte Hüllrohr-Wandung erstreckt,
(b) Bereitstellen einer Anzahl von Antiresonanzelement-Vorformlingen (5),
(c) Anordnen der Antiresonanzelement-Vorformlinge (5) an Soll-Positionen der Innenseite der Hüllrohr-Wandung unter Bildung einer primären Vorform (7) für die Hohlkernfaser, die einen hohlen Kernbereich und einen Mantelbereich aufweist, und
(d) optionale Weiterverarbeitung der primären Vorform zu einer sekundären Vorform für die Hohlkernfaser, wobei die Weiterverarbeitung eine einmalige oder wiederholte Durchführung von einem oder mehreren der folgenden Heißformprozesse umfasst:
(i) Elongieren,
(ii) Kollabieren,
(iii) Kollabieren und gleichzeitiges Elongieren,
(iv) Aufkollabieren von zusätzlichem Mantelmaterial,
(v) Aufkollabieren von zusätzlichem Mantelmaterial und anschließendes Elongieren,
(vi) Aufkollabieren von zusätzlichem Mantelmaterial und gleichzeitiges Elongieren,
**dadurch gekennzeichnet, dass** zum Anordnen der Antiresonanzelement-Vorformlinge (5) gemäß Verfahrensschritt (c) in die Hüllrohr-Innenbohrung eine Positionierungsschablone (1) eingesetzt wird, die Halteelemente (3) zur Positionierung der Antiresonanzelement-Vorformlinge (5) an den Soll-Positionen aufweist, und dass die Positionierungsschablone (1) mindestens ein Rastmittel aufweist, das mit einem Rastmittel-Gegenstück (6) in der Hüllrohr-Wandung unter Ausbildung einer kraft- und/oder formschlüssigen Verbindung zusammenwirkt.

## Claims

1. A method for producing an anti-resonant hollow-core fiber which comprises a hollow core extending along a longitudinal axis of the fiber and an inner casing region that surrounds the hollow core and comprises a plurality of anti-resonant elements, comprising the method steps of:
(a) providing a cladding tube (4), which comprises a cladding tube inner bore and a cladding tube longitudinal axis, along which a cladding tube wall extends, which wall is delimited by an inner face and an outer face,
(b) providing a number of anti-resonant element preforms (5),
(c) arranging the anti-resonant element preforms (5) at desired positions on the inner face of the cladding tube wall to form a primary preform (7) for the hollow-core fiber, which primary preform comprises a hollow core region and a casing region, and
(d) elongating the primary preform (7) to form the hollow-core fiber or further processing the primary preform (7) to form a secondary preform from which the hollow-core fiber is drawn, the further processing comprising carrying out one or more of the following hot-forming processes once or repeatedly:
(i) elongation,
(ii) collapse,
(iii) collapse and simultaneous elongation,
(iv) collapse of additional casing material,
(v) collapse of additional casing material and subsequent elongation,
(vi) collapse of additional casing material and simultaneous elongation,
**characterized in that**, in order to arrange the anti-resonant element preforms (5) according to method step (c), a positioning template (1) is inserted into the cladding tube inner bore, which template comprises holding elements (3) for positioning the anti-resonant element preforms (5) in the desired positions, and **in that** the positioning template (1) comprises at least one latching means which interacts with a latching means counterpart (6) in the cladding tube wall to form a force-fitting and/or form-fitting connection.

2. The method according to claim 1, **characterized in that** a positioning template (1) having a shaft (2) that projects into the cladding tube inner bore is inserted, which shaft is provided with holding elements (3) in the form of a plurality of holding arms pointing radially outward.

3. The method according to either claim 1 or claim 2, **characterized in that** the anti-resonant element preforms (5) are tubular having a tube outer lateral surface, and **in that** each holding element (3) has at least two contact points with the tube outer lateral surface of the antiresonant element preform (5) to be held.

4. The method according to any of the preceding claims, **characterized in that** the positioning template (1) is inserted in the region of a cladding tube end face, preferably in the region of both cladding tube end faces.

5. The method according to claim 1, **characterized in that** the latching means counterpart (6) is arranged in the end face of the cladding tube wall and the latching means is completely retractable therein.

6. The method according to either claim 1 or claim 5, **characterized in that** the latching means counterpart (6) does not reach the outer face of the cladding tube.

7. The method according to any of the preceding claims, **characterized in that** the positioning template (1) is made of graphite or glass, preferably quartz glass.

8. The method according to any of the preceding claims, **characterized in that** the positioning template (1) is machined with a dimensional deviation of less than +/- 0.1 mm.

9. The method according to any of the preceding claims, **characterized in that** a cladding tube (5) having a circular inner cross section is provided, which comprises a longitudinal structure (8) on the inner face of the cladding tube wall, which structure is designed as a longitudinal groove or as a longitudinal slot.

10. The method according to any of the preceding claims, **characterized in that** the inner face of the cladding tube is produced by machining, in particular by drilling, milling, grinding, honing and/or polishing.

11. The method according to any of the preceding claims, **characterized in that** arranging the antiresonant element preforms (5) at desired positions on the inner face of the cladding tube wall and/or elongating or further processing the primary preform (7) according to method step (d) includes a fixing measure and/or a sealing measure using an amorphous SiOz particle-containing sealing or bonding compound.

12. A method for producing a preform for an anti-resonant hollow-core fiber which comprises a hollow core extending along a longitudinal axis of the fiber and an inner casing region that surrounds the hollow core and comprises a plurality of anti-resonant elements, comprising the method steps of:
(a) providing a cladding tube (4), which comprises a cladding tube inner bore and a cladding tube longitudinal axis, along which a cladding tube wall extends, which wall is delimited by an inner face and an outer face,
(b) providing a number of anti-resonant element preforms (5),
(c) arranging the anti-resonant element preforms (5) at desired positions on the inner face of the cladding tube wall to form a primary preform (7) for the hollow-core fiber, which primary preform comprises a hollow core region and a casing region, and
(d) optionally further processing the primary preform to form a secondary preform for the hollow-core fiber, the further processing comprising carrying out one or more of the following hot-forming processes once or repeatedly:
(i) elongation,
(ii) collapse,
(iii) collapse and simultaneous elongation,
(iv) collapse of additional casing material,
(v) collapse of additional casing material and subsequent elongation,
(vi) collapse of additional casing material and simultaneous elongation,
**characterized in that**, in order to arrange the anti-resonant element preforms (5) according to method step (c), a positioning template (1) is inserted into the cladding tube inner bore, which template comprises holding elements (3) for positioning the anti-resonant element preforms (5) in the desired positions, and **in that** the positioning template (1) comprises at least one latching means which interacts with a latching means counterpart (6) in the cladding tube wall to form a force-fitting and/or form-fitting connection.

## Revendications

1. Procédé pour la fabrication d'une fibre à coeur creux antirésonante qui présente un coeur creux s'étendant le long d'un axe longitudinal de fibre et une zone enveloppante interne entourant le coeur creux, laquelle comprend plusieurs éléments antirésonance, comportant les étapes de procédé consistant à :
(a) fournir un tuyau de gaine (4) qui présente un trou interne de tuyau de gaine et un axe longitudinal de tuyau de gaine le long duquel s'étend une paroi de tuyau de gaine délimitée par une face interne et une face externe,
(b) fournir un certain nombre de préformes d'éléments antirésonance (5),
(c) disposer les préformes d'éléments antirésonance (5) en des positions de consigne de la face interne de la paroi de tuyau de gaine pour former une préforme primaire (7) pour la fibre à coeur creux, laquelle préforme primaire présente une zone de coeur creux et une zone enveloppante, et
(d) allonger la préforme primaire (7) en fibre à coeur creux ou traiter ultérieurement la préforme primaire (7) en une préforme secondaire à partir de laquelle la fibre à coeur creux est étirée, dans lequel le traitement ultérieur comprend une réalisation unique ou répétée d'un ou de plusieurs des procédés de thermoformage suivants :
(i) allongement,
(ii) écrasement,
(iii) écrasement et allongement simultané,
(iv) écrasement de matériau enveloppant supplémentaire,
(v) écrasement de matériau enveloppant supplémentaire et allongement consécutif,
(vi) écrasement de matériau enveloppant supplémentaire et allongement simultané,
**caractérisé en ce que**, pour la disposition des préformes d'éléments antirésonance (5) conformément à l'étape de procédé (c), un gabarit de positionnement (1) est introduit dans le trou interne de tuyau de gaine, lequel gabarit de positionnement présente des éléments de maintien (3) pour le positionnement des préformes d'éléments antirésonance (5) aux positions de consigne, et **en ce que** le gabarit de positionnement (1) présente au moins un moyen d'encliquetage qui coopère avec une contre-pièce de moyen d'encliquetage (6) dans la paroi de tuyau de gaine pour former une liaison par force et/ou par complémentarité de forme.

2. Procédé selon la revendication 1, **caractérisé en ce qu'**un gabarit de positionnement (1) est introduit avec une tige (2) faisant saillie dans le trou interne de tuyau de gaine, laquelle tige est pourvue d'éléments de maintien (3) sous la forme de plusieurs bras de maintien dirigés radialement vers l'extérieur.

3. Procédé selon la revendication 1 ou 2, **caractérisé en ce que** les préformes d'éléments antirésonance (5) sont conçues en forme de tuyaux comportant une surface enveloppante externe de tuyau, et **en ce que** chaque élément de maintien (3) présente au moins deux points de contact avec la surface enveloppante externe de tuyau de la préforme d'élément antirésonance (5) à maintenir.

4. Procédé selon l'une des revendications précédentes, **caractérisé en ce que** le gabarit de positionnement (1) est introduit dans la zone d'une face frontale de tuyau de gaine, de préférence dans la zone de deux faces frontales de tuyau de gaine.

5. Procédé selon la revendication 1, **caractérisé en ce que** la contre-pièce de moyen d'encliquetage (6) est disposée dans la face frontale de la paroi de tuyau de gaine et le moyen d'encliquetage peut y être entièrement enfoncé.

6. Procédé selon la revendication 1 ou 5, **caractérisé en ce que** la contre-pièce de moyen d'encliquetage (6) ne va pas jusqu'à la face externe de tuyau de gaine.

7. Procédé selon l'une des revendications précédentes, **caractérisé en ce que** le gabarit de positionnement (1) est constitué de graphite ou de verre, de préférence de verre de quartz.

8. Procédé selon l'une des revendications précédentes, **caractérisé en ce que** le gabarit de positionnement (1) est produit à la machine avec une variation dimensionnelle inférieure à +/- 0,1 mm.

9. Procédé selon l'une des revendications précédentes, **caractérisé en ce qu'**un tuyau de gaine (5) comportant une section transversale interne circulaire est fourni, lequel présente, sur la face interne de la paroi de tuyau de gaine, une structure longitudinale (8) qui est réalisée sous forme de rainure longitudinale ou de fente longitudinale.

10. Procédé selon l'une des revendications précédentes, **caractérisé en ce que** la face interne de tuyau de gaine est obtenue par usinage par enlèvement de matière, en particulier par perçage, fraisage, meulage, rodage et/ou polissage.

11. Procédé selon l'une des revendications précédentes, **caractérisé en ce que** la disposition des préformes d'éléments antirésonance (5) en des positions de consigne de la face interne de la paroi de tuyau de gaine et/ou l'allongement ou le traitement ultérieur de la préforme primaire (7) conformément à l'étape de procédé (d) comprennent une mesure de fixation et/ou une mesure de scellement à l'aide d'une matière de scellement ou de liaison contenant des particules amorphes de SiOz.

12. Procédé pour la fabrication d'une préforme pour une fibre à coeur creux antirésonante qui présente un coeur creux s'étendant le long d'un axe longitudinal de fibre et une zone enveloppante interne entourant le coeur creux, laquelle zone enveloppante comprend plusieurs éléments antirésonance, comportant les étapes de procédé consistant à :
(a) fournir un tuyau de gaine (4) qui présente un trou interne de tuyau de gaine et un axe longitudinal de tuyau de gaine le long duquel s'étend une paroi de tuyau de gaine délimitée par une face interne et une face externe,
(b) fournir un certain nombre de préformes d'éléments antirésonance (5),
(c) disposer les préformes d'éléments antirésonance (5) en des positions de consigne de la face interne de la paroi de tuyau de gaine pour former une préforme primaire (7) pour la fibre à coeur creux, laquelle préforme primaire présente une zone de coeur creux et une zone enveloppante, et
(d) éventuellement, traiter ultérieurement la préforme primaire en une préforme secondaire pour la fibre à coeur creux, dans lequel le traitement ultérieur comprend une réalisation unique ou répétée d'un ou de plusieurs des procédés de thermoformage suivants :
(i) allongement,
(ii) écrasement,
(iii) écrasement et allongement simultané,
(iv) écrasement de matériau enveloppant supplémentaire,
(v) écrasement de matériau enveloppant supplémentaire et allongement consécutif,
(vi) écrasement de matériau enveloppant supplémentaire et allongement simultané,
**caractérisé en ce que**, pour la disposition des préformes d'éléments antirésonance (5) conformément à l'étape de procédé (c), un gabarit de positionnement (1) est introduit dans le trou interne de tuyau de gaine, lequel gabarit de positionnement présente des éléments de maintien (3) pour le positionnement des préformes d'éléments antirésonance (5) aux positions de consigne, et **en ce que** le gabarit de positionnement (1) présente au moins un moyen d'encliquetage qui coopère avec une contre-pièce de moyen d'encliquetage (6) dans la paroi de tuyau de gaine pour former une liaison par force et/ou par complémentarité de forme.
